**Europäisches Patentamt**

**European Patent Office**

**Office européen des brevets**

(11) Veröffentlichungsnummer: **0 028 658**
**A1**

# (12) EUROPÄISCHE PATENTANMELDUNG

(21) Anmeldenummer: **79104375.5**

(22) Anmeldetag: **08.11.79**

(51) Int. Cl.³: **D 21 B 1/32**
**D 21 D 1/00**

(43) Veröffentlichungstag der Anmeldung:
**20.05.81 Patentblatt 81/20**

(84) Benannte Vertragsstaaten:
**AT BE CH DE FR GB IT LU NL SE**

(71) Anmelder: **Hermann Finckh Maschinenfabrik GmbH & Co.**
**Marktstrasse 185**
**D-7417 Pfullingen(DE)**

(72) Erfinder: **Weig, Moritz**
**Bürresheimer Strasse 33**
**D-5440 Mayen(DE)**

(72) Erfinder: **Hanke, Hugo, Dipl.-Ing.**
**Bachstrasse 60**
**D-5440 Mayen(DE)**

(72) Erfinder: **Holz, Emil**
**Metzinger Strasse 51**
**D-7412 Eningen u.A.(DE)**

(72) Erfinder: **Hutzler, Hagen, Ing.-Grad.**
**Gaussstrasse 4**
**D-7400 Reutlingen(DE)**

(74) Vertreter: **Patentanwaltskanzlei Höger, Stellrecht & Partner**
**Uhlandstrasse 14c**
**D-7000 Stuttgart 1(DE)**

(54) **Verfahren und Vorrichtung zum Aufbereiten von Altpapier.**

(57) Verfahren und Einrichtung zum Aufbereiten von Altpapier, bei dem dieses außerordentlich faserschonend und energiesparend aufgelöst wird. Zu diesem Zweck wird das Altpapier bei einer relativ niederen Temperatur von ca. 40°C eingeweicht und dann zwischengelagert, wobei dem Abwasser des Verfahrens Wärme entzogen und diese zur Erwärmung des Einweichwassers verwendet wird. Zur Einstellung optimaler Stoffdichten während des Verfahrens wird beim Einweichen chargenweise gearbeitet sowie das Altpapier gewogen und eine berechnete Wassermenge zugesetzt. Zur besonderen Schonung der Fasern während des Auflösens wird beim Einweichen eine relativ hohe Stoffdichte von ca. 8-12 % eingestellt, der Stoff in einem rotierenden Behälter (12) eingeweicht und anschließend in einem weiteren Behälter (52) in rasche Zirkulation versetzt. Schließlich wird die so hergestellte Fasersuspension in einer liegenden Siebtrommel (72) sortiert.

./...

Fig. 1

DR.-ING.   DIPL.-ING. M. SC.   DIPL.-PHYS. DR.   DIPL.-PHYS.

# HÖGER – STELLRECHT – GRIESSBACH – HAECKER

PATENTANWÄLTE IN STUTTGART

A 0010 b
b - 135
10. Sept. 1979

Firma Hermann Finckh
Maschinenfabrik GmbH & Co.
Marktstraße 185
D-7417 Pfullingen

B e s c h r e i b u n g :

### Verfahren und Einrichtung zum Aufbereiten von Altpapier

Bei den in der Praxis üblichen Verfahren zum Aufbereiten von
Altpapier wird so vorgegangen, daß dieses zusammen mit Wasser
in einen sog. Stofflöser (auch Pulper genannt) gegeben wird,
welcher einen oben offenen Behälter aufweist, dessen Boden
von der Antriebswelle eines im Behälter-Innern angeordneten
Auflöserads durchsetzt wird; über dem Behälterboden und unter
dem Auflöserad befindet sich ein Sieb,  und der Behälterboden
ist mit einem Auslaß versehen.  In diesen bekannten Stofflösern wird dem Altpapier so viel Wasser zugesetzt, daß sie
etwa in einem Stoffdichtebereich von zwei bis sechs Prozent
arbeiten.  Der Stofflöser wird solange betrieben, bis das
Altpapier weitgehendst aufgelöst ist, und das Sieb über dem
Behälterboden dient dazu, nicht auflösbares Material wie
Metallteile, Holz-/und Kunststoffteile (soweit dies möglich
Glasist) zurückzuhalten - während des Auflösens des Altpapiers
im Stofflöser zerkleinert das Auflöserad unvermeidbar auch
Kunststoffanteile wie Kunststoffbeschichtungen von Papier
und Karton, Kunststoffbeutel und -tüten usf., so daß ein
erheblicher Anteil des Kunststoffs das Sieb des Stofflösers
passieren kann und später nur schwer wieder aus der im
Stofflöser erzeugten Fasersuspension abgeschieden werden
kann. Weitere Nachteile des bekannten Verfahrens sind ein
hoher Verschleiss am Auflöserad und am Sieb, bedingt vor
allem durch die im Altpapier enthaltenen Metallteile und
die erforderliche lange Betriebszeit des Stofflösers bis
zur Auflösung des Altpapiers, Stillstandszeiten aufgrund
der in Intervallen erforderlichen Reinigung des über dem
Behälterboden befindlichen Siebs und der hohe Energiebedarf
für die Auflösung des Altpapiers im Stofflöser. In diesem
Zusammenhang ist zu beachten, daß der Verunreinigungsgrad
von Altpapier von Jahr zu Jahr zunimmt.

Insgesamt nicht besser ist der neuerdings bekannt gewordene
Einsatz eines herkömmlichen Stofflösers mit einem Sieb mit
größeren Löchern in Verbindung mit einem sog. Nachauflöser
gleicher Bauart, dessen Sieb jedoch wesentlich kleinere Löcher
aufweist. Bei diesem Verfahren wird ein Teil der Auflösearbeit
vom Nachauflöser verrichtet, und Metall- und Holzteile sowie
anderer Leichtschmutz wie z.B. Schaumkunststoffe werden im
Nachauflöser aus der Fasersuspension ausgeschleust. Zwar muss
dann wegen der größeren Löcher seines Siebs der erste Stofflöser nicht so oft gereinigt werden, d.h. die Reinigungsintervalle sind dort länger, jedoch werden bei diesem bekannten
Verfahren Schmutzteile und vor allem Kunststoffe so stark zerkleinert, daß deren späteres Aussortieren unverhältnismäßig
hohe weitere Kosten verursacht und zu erheblichen Qualitätseinbußen bei dem erzeugten Faserstoff führt. Ausserdem benötigt
man für diese Art der Aufbereitung natürlich gleichfalls verhältnismäßig viel Energie.

Der Erfindung lag nun die Aufgabe zugrunde, ein Aufbereitungsverfahren für Altpapier zu schaffen, bei dem das letztere
schonender aufgelöst und ausserdem weniger Energie benötigt
wird und durch das sich die vorstehend aufgeführten Nachteile
der bekannten Verfahren mindestens zum Teil vermeiden lassen.

Ausgehend von einem Verfahren zum Aufbereiten von Altpapier, bei
dem dieses unter ständiger Bewegung und Umschichtung eingeweicht,
dabei ggf. chemisch behandelt, aufgelöst sowie die sich dann ergebende Fasersuspension sortiert wird, läßt sich diese Aufgabe
erfindungsgemäß dadurch lösen, daß der eingeweichte Stoff unmittelbar nach dem Einweichen zum Quellen zwischengelagert wird.
Dadurch erreicht man selbst bei verhältnismäßig kurzer Einweichzeit, daß sich der Stoff schonend auflösen läßt, ohne daß dabei
eine Zerkleinerung von unbrauchbaren Anteilen wie z.B. Kunststoffolien  in Kauf genommen werden muß. Außerdem läßt sich das
Auflösen mit weit geringerem Energieaufwand bewerkstelligen, da
während der Zwischenlagerungszeit ja keine Energie aufgewandt
werden muß, so daß diese und damit die für das Quellen des Altpapiers zur Verfügung stehende Zeit nahezu beliebig lang gewählt
werden kann.

Eine ganz erhebliche Energieeinsparung ergibt sich, wenn man den
Stoff während eines längeren Zeitraums quellen läßt und eine
bessere Durchnetzung des Fasermaterials als bisher herbeiführt;
deshalb kann bei dem erfindungsgemäßen Verfahren die Einweichzeit
bis zu 2 Stunden (bei schwer lösbarem Altpapier) und die Zwischenlagerungszeit bis zu 4 Stunden betragen.

Bisher war man der Auffassung, daß das Einweichen zweckmäßigerweise bei möglichst hohen Temperaturen vorzunehmen sei, da man
glaubte, die Wirksamkeit des Einweichvorgangs nehme mit der
Temperatur zu. Überraschenderweise stellte der Erfinder nun fest,
daß optimale Ergebnisse schon bei Einweichtemperaturen von zirka
40°.C erzielt werden und höhere Temperaturen keinen Vorteil mit
sich bringen, vielmehr eine Energievergeudung darstellen und den
Nachteil einer irreversiblen Verhornung der Fasern und damit eine
Faserschädigung mit sich bringen. Deshalb wird bei einer bevorzugten Ausführungsform des erfindungsgemäßen Verfahrens bei einer
Temperatur von ungefähr 40° C eingeweicht, wodurch sich weiter
Energie sparen läßt.

Da Industrieabwässer in der Regel relativ warm  sind und beim Aufbereiten von Altpapier durch mechanische Verfahrensschritte Energie in die Fasersuspensionen eingeleitet und diese dadurch erwärmt
wird, so daß auch die Abwässer solcher Aufbereitungsverfahren eine
gegenüber der Raumtemperatur erhöhte Temperatur besitzen, erhöhte
Temperaturen von Industrieabwässern aber nicht nur unerwünscht
sind, sondern eine Energievergeudung darstellen, wird ferner vorgeschlagen, dem Abwasser der gesamten Fabrik, insbesondere dem

A 0010 b
b - .184
15. Oktober 1979                    - 4 -

Abwasser des Aufbereitungsverfahrens Wärme zu entziehen und diese
dem Einweichwasser zuzuführen, und zwar vorzugsweise unter Verwendung einer Wärmepumpenanlage.

Zur Förderung der Auflösung des Faserstoffs hat es sich ferner
als zweckmäßig erwiesen, den Stoff aus der zwischengelagerten
Stoffmenge in kleinen Portionen herauszukratzen.

Der Erfinder erkannte, daß es zweckmäßig ist, bei allen Schritten eines solchen Aufbereitungsverfahrens ganz bestimmte Stoffdichten bzw. Stoffdichtebereiche einzuhalten. Deshalb wird für eine bevorzugte Ausführungsform des erfindungsgemäßen Verfahrens, bei dem das Altpapier chargenweise eingeweicht wird, vorgeschlagen, das einzuweichende Altpapier zu wiegen und die zuzugebende Wassermenge entsprechend der für das Einweichen günstigen Stoffdichte zu errechnen und abzumessen.

Für die angestrebte, schonende Auflösung des Fasermaterials ist es zweckmäßig, den eingeweichten und zwischengelagerten Stoff zur Einstellung einer Stoffdichte von mindestens ungefähr 8%, vorzugsweise von 8-12%, mit Wasser zu versetzen und dadurch mit diesem zu mischen, daß Stoff und Wasser gemeinsam für einige wenige Minuten in rasche Zirkulation versetzt werden. Bei dem erfindungsgemäßen Verfahren arbeitet man also bei einer deutlich höheren Stoffdichte als mit den bekannten Pulpern (dort 2-6%), wodurch auch in relativ kurzer Zeit ein hoher Auflösungsgrad erreicht werden kann.

Während die bekannten Pulper wegen des eingebauten Siebs auch Sortiervorrichtungen darstellen, wird bei der Durchführung des erfindungsgemäßen Verfahrens empfohlen, den Stoff erst nach Beendigung der raschen Zirkulation, d.h. des Mischvorgangs, zu sortieren.

Zweckmäßigerweise wird das erfindungsgemäße Verfahren mit einer Einrichtung durchgeführt, die ein in Rotation versetzbares Einweichgefäß mit einer Öffnung und einem servobetätigten Verschluss hierfür aufweist sowie mit einer Wiegevorrichtung für das einzuweichende Altpapier, einer Bemessungsvorrichtung für das Einweichwasser und einem von diesen beiden Vorrichtungen beaufschlagbaren Rechner zur Steuerung des Verschlusses versehen ist. Dadurch läßt sich der Einweichvorgang automatisch steuern, und ausserdem ist die Einstellung einer optimalen Stoffdichte gewährleistet. Zweckmäßigerweise sieht man dann für das Zwischenlagern des eingeweichten Stoffs unmittelbar unter dem Einweichgefäß einen Bunker vor. Um den Auflösevorgang zu fördern und den gequollenen Stoff gleichmäßig auf ein Förderband oder dgl. zu geben, empfiehlt es sich, am Boden des Bunkers eine Bunkerentleerungs- und Verteileinrichtung vorzusehen, welche zumindest über den größeren Teil des Bunkerbodenquerschnitts verteilt mehrere Stofförderelemente aufweist.

Entsprechend der automatischen Steuerung des Einweichvorgangs empfiehlt es sich, eine einem Mischer zur Durchführung des Mischvorgangs zugeordnete Wiegevorrichtung zum Wiegen der in den Mischer einzugebenden Stoffmenge, einen an die Wiegevorrichtung angeschlossenen Rechner zur Bestimmung der in den Mischer einzugebenden Wassermenge sowie eine rechnergesteuerte Bemessungsvorrichtung für die Wassermenge vorzusehen, wodurch auch für den Mischvorgang die vorstehend angegebene, günstigste Stoffdichte zuverlässig eingehalten wird.

Weitere Merkmale, Vorteile und Einzelheiten der Erfindung ergeben sich aus den beigefügten Ansprüchen und/oder aus der nachfolgenden Beschreibung und/der beigefügten zeichnerischen Darstellung einer bevorzugten Ausführungsform einer erfindungsgemäßen Einrichtung zur Aufbereitung von Altpapier; es zeigen:

- 11 -

Fig. 1 eine schematische Darstellung der Gesamteinrichtung;

Fig. 2 eine größere Darstellung des Bunkers der Einrichtung
        gemäß Fig. 1, und

Fig. 3 eine Stirnansicht des Bunkers.

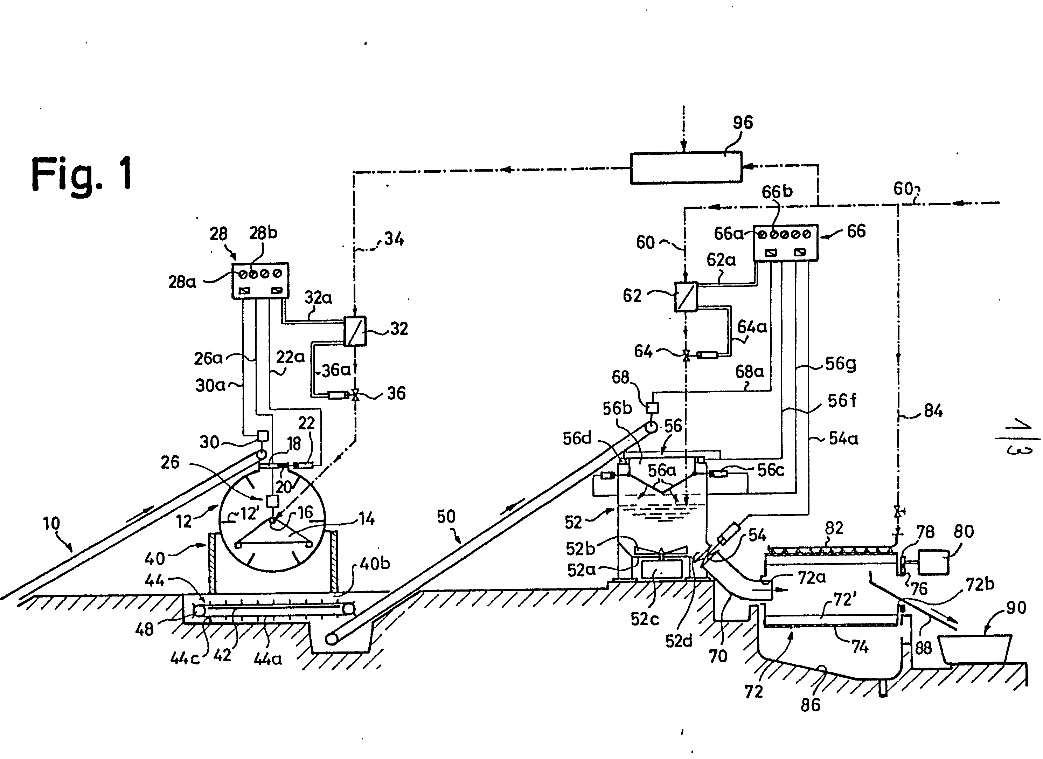

Mit einem nicht dargestellten Flurfördergerät wird Altpapier lose
oder in Ballen auf ein Förderband 10 gelegt, welches das
Altpapier zu einem Einweichgefäß 12 transportiert. Dieses
besitzt außen nicht dargestellte Achsstummel, mit denen es
in angedeuteten Lagergestellen 14 gelagert ist, so daß es
durch einen gleichfalls nicht dargestellten Elektromotor um
eine zentrale, senkrecht zur Zeichnungsebene der Figur 1
verlaufende Achse 16 in Drehung versetzt werden kann. Es besitzt eine Öffnung 18, die durch einen Schieber 20 verschlossen
werden kann. Dieser wird durch einen Druckmittelzylinder 22
betätigt, so daß sich die Öffnung 18 gesteuert öffnen und
schliessen läßt.

An einer oder an beiden Achsen des Einweichgefäßes 12 ist eine
Wiegevorrichtung 26 vorgesehen, durch die sich die vom Förderband 10 in das Einweichgefäß 12 gegebene Altpapiermenge bestimmen läßt. Diese Wiegevorrichtung 26 ist über eine Leitung
26a an einen Rechner 28 angeschlossen. Dieser steuert über
eine nicht dargestellte Leitung auch den Antriebsmotor des
Einweichgefäßes 12, so daß der Einweichvorgang nach einer
vorgegebenen Zeit beendet werden kann. Ausserdem steuert
der Rechner über eine Leitung 22a den Druckmittelzylinder 22
zum Öffnen oder Schließen des Einweichgefäßes 12. Gleichfalls
vom Rechner gesteuert, und zwar über eine Leitung 30a, wird
eine Antriebsvorrichtung 30 für das Förderband 10, und

schließlich steuert der Rechner 28 über eine Leitung 32a einen
in einer Einweichwasserleitung 34 liegenden Durchflußmengenmesser 32, hinter dem in der Einweichwasserleitung 34 ein Ventil
36 sitzt, welches vom Durchflussmengenmesser über eine Leitung
36a gesteuert wird. Vom Ventil 36 führt die Einweichwasserleitung 34 in das Einweichgefäß 12, und zwar vorzugsweise durch
die hohl ausgebildete Drehachse in das Innere des Einweichgefäßes.

Am Rechner 28 gibt man nun über Einstellelemente 28a, 28b etc.
Einweichzeit, Altpapierart und Altpapiermenge je einzuweichender Charge sowie die
Stoffdichte für den Einweichvorgang ein. Der Rechner öffnet dann
den Schieber 20, setzt das Förderband 10 in Bewegung, bis sich
die pro Charge einzuweichende Altpapiermenge im Einweichgefäß 12
befindet, öffnet über den Durchflußmengenmesser 32 das Ventil
36 solange, bis die für die vorgewählte Stoffdichte erforderliche Einweichwassermenge sich im Einweichgefäß 12 befindet,
schließt dann dessen Öffnung 18 und schaltet den Antrieb für
das Einweichgefäß 12 während der vorgewählten Einweichzeit ein.
Anschließend wird das Einweichgefäß in einer Stellung stillgesetzt, in der seine Öffnung 18 nach unten weist, worauf der
Schieber 20 öffnet und sich das Einweichgefäß entleert. Die
eingeweichte Altpapiermenge gelangt dann in einen unter dem
Einweichgefäß 12 angeordneten Bunker 40, wo der Stoff zwischengelagert wird, so daß er weiterquellen kann.

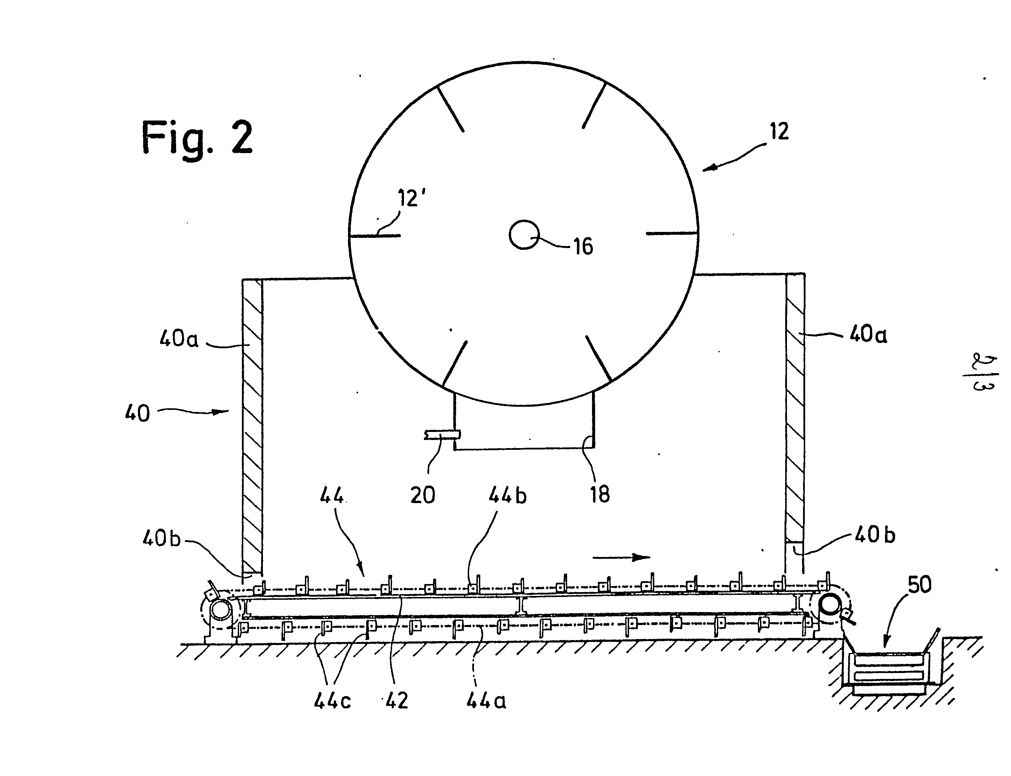

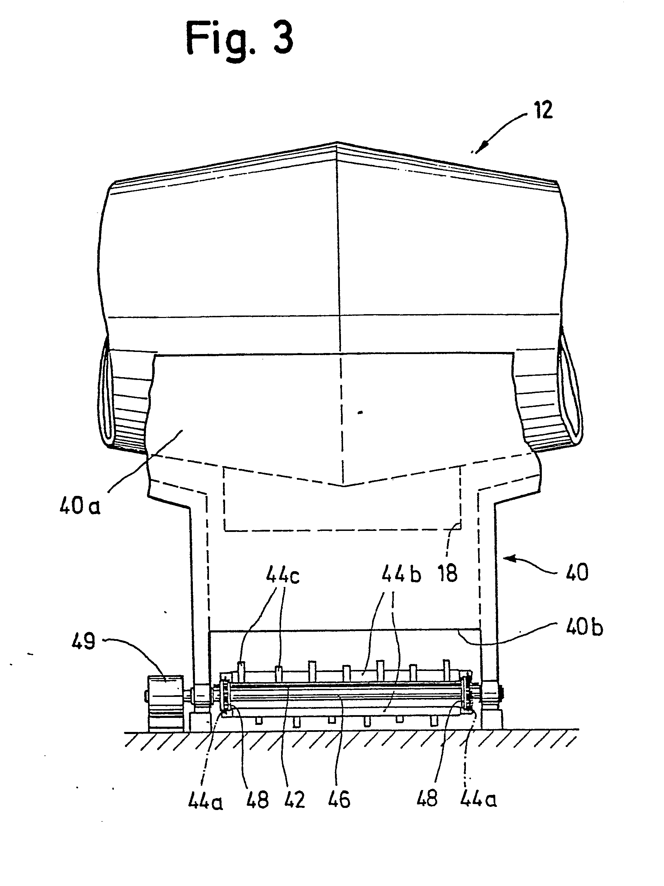

Wie die Fig. 2 und 3 erkennen lassen, verläuft über einen
Bunkerboden 42 eine Bunkerentleerungs- und Verteileinrichtung 44
mit zwei endlosen Ketten 44a, zwischen denen Räumleisten 44b
verlaufen, an denen Mitnehmerelemente 44c befestigt sind. Die
Ketten 44a verlaufen über an Wellen 46 befestigte Kettenräder 48, so daß sie von einem eine der Wellen antreibenden Getriebemotor 49 in Umlauf versetzt werden können. Da für den Einweichvorgang eine verhältnismäßig hohe Stoffdichte von ungefähr 20-40% eingestellt wird, können zwischen den Bunkerstirnwänden 40a und dem Bunkerboden 42 Querschlitze 40b vorgesehen werden, durch die die Entleerungseinrichtung 44 den gequollenen Stoff aus dem Bunker herausfördert und auf ein Förderband 50 gibt.

Das Förderband 50 transportiert den eingeweichten und gequollenen Stoff zu einem Mischer 52 mit einem unmittelbar über seinem Boden 52a angeordneten Mischerrad 52b mit vertikaler Achse, welches durch einen unter dem Mischerboden angeordneten Motor 52c angetrieben wird. Im Bereich des Mischerbodens ist ferner eine Entleerungsöffnung 52d vorgesehen, die ein Entleerungsventil 54 besitzt.

Im oberen Bereich des Mischers 52 ist eine Wiegeeinrichtung 56 angeordnet, die eine oben offene und unten durch in Pfeilrichtung aufschwenkbare Klappen 56a verschließbare Kammer 56b aufweist. Diese Klappen lassen sich durch Druckmittelzylinder 56c öffnen und schließen, und zur Bestimmung des Gewichts der in die Kammer 56b gegebenen Stoffmenge sind Wiegeelemente 56d vorgesehen.

In einer in das Innere des Mischers 52 führenden Verdünnungswasserleitung 60 sind gleichfalls ein Durchflußmengenmesser 62 und ein Ventil 64 vorgesehen, um einer durch die Wiegeeinrichtung 56 abgemessenen Stoffmenge eine ganz bestimmte Menge Verdünnungswassers zugeben zu können. Ferner ist ein Rechner 66 vorgesehen, der über eine Leitung 68a eine Antriebsvorrichtung 68 für das Förderband 50 steuert, über eine Leitung 56f ein gewichtsabhängiges Signal von den Wiegeelementen 56d erhält, über eine Leitung 62a, den Durchflußmengenmesser 62 und eine Leitung 64a

A 0010 b
b - 135
10. Sept. 1979

das Ventil 64 öffnet und schließt, über eine Leitung 56g die
Druckmittelzylinder 56c steuert und über eine Leitung 54a das
Entleerungsventil 54 öffnet und schließt. Über Einstellelemente
66a, 66b etc. lassen sich die Stoffmenge pro zu mischender Charge,
die Stoffdichte der Fasersuspension nach dem Abschluß des Mischvorgangs und dessen Dauer vorwählen.

Das Mischerrad 52b ist so ausgebildet, daß der in den Mischer
52 gegebene Stoff und das Verdünnungswasser in raschen Umlauf versetzt und miteinander vermischt werden, wobei gleichzeitig die
Auflösung des Fasermaterials vervollständigt wird. Nach Ablauf
des Mischvorgangs öffnet sich das Entleerungsventil 54 und wird
anschließend wieder geschlossen. Daraufhin transportiert das
Förderband 50 bei geschlossenen Klappen 56a die vorgewählte
Stoffmenge in die Wiegeeinrichtung 56, worauf die Klappen 56a
geöffnet werden, so daß die Stoffmenge in den Mischer 52 fällt,
in den gleichzeitig die erforderliche Verdünnungswassermenge
gegeben wird.

Vom Mischer 52 führt ein Rohrstutzen 70 in einen vorn und hinten
offenen Trommelsortierer, bei dem es sich um eine um eine horizontale Achse antreibbare zylindrische Trommel mit einem als
Sieb ausgebildeten Mantel 74 handelt. Der Trommelsortierer wird
über einen Zahnkranz 76 und ein auf der Achse eines Motors 80
sitzendes Ritzel 78 angetrieben. Über dem Trommelsortierer 72
befindet sich ein Spritzrohr 82, welches über eine Leitung 84
an die Verdünnungswasserleitung 60 angeschlossen ist. Unter dem
Trommelsortierer 72 befindet sich eine Bütte 86 zur Aufnahme des
Gutstoffs, d.h. des brauchbaren Fasermaterials, während der sog.
Spuckstoff, d.h. der nicht brauchbare Teil des Altpapiers, über
die Auslaßöffnung 72b des Trommelsortierers 72 und eine Rutsche 88
in einen Spuckstoffbehälter 90 gelangt.

Die über den Stutzen 70 und die Einlaßöffnung 72a des Trommelsortierers 72 in dessen Inneres geförderte Fasersuspension wird
dort sortiert, wobei die gegen die Außenseite des Siebmantels
74 gerichteten Düsen des Spritzrohrs 82 bewirken, daß die guten
Fasern der Fasersuspension aus deren Spuckstoff ausgewaschen und
durch die Sieböffnungen hindurch in die Bütte 86 gespült werden.
Ausserdem dienen die Spritzrohrdüsen der kontinuierlichen
Reinigung des Siebmantels 74.

Es empfiehlt sich, im Innern des Einweichgefäßes 12 und des
Trommelsortierers 72 Mitnehmerleisten 12' bzw. 72' anzuordnen.

Die das Wasser für den Mischer 52 und das Einweichgefäß 12
liefernde Leitung 60 wird zweckmäßigerweise mit demjenigen
Wasser gespeist, welches der Fasersuspension vor der nicht
gezeigten Papiermaschine durch einen üblichen Eindicker entzogen wird. In der von der Leitung 60 abzweigenden Einweichwasserleitung 34 ist ein Wärmetauscher einer als Ganzes mit 96
bezeichneten Wärmepumpenanlage angeordnet, bei der es sich
zweckmäßigerweise um eine Gas-Wärmepumpenanlage handelt. Durch
diese wird dem Abwasser in einer nicht gezeichneten Abwasserleitung der Aufbereitungsanlage Wärme entzogen und dem Einweichwasser zugeführt. Da derartige Wärmepumpenanlagen bekannt sind,
erübrigt es sich, diese im Einzelnen zu schildern.

Die Behandlungszeit im Einweichgefäß 12 beträgt zweckmäßigerweise
zwischen ungefähr 20 und 45 min., worauf der Stoff im Bunker
40 ungefähr 30 bis 60 min gestapelt werden sollte, damit er
unter dem Einfluß des Einweichwassers quellen kann, was den
Auflösungsprozess wesentlich erleichtert und zu einer schonenden
Auflösung des Fasermaterials führt.

A 0010 b
b - 135
10. Sept. 1979

Im Mischer arbeitet man zweckmäßigerweise bei einer relativ hohen Stoffdichte von mindestens 8%, vorzugsweise bei einer Stoffdichte von ungefähr 8-12%, weil es dann genügt, jede Charge ungefähr 2-5 min im Mischer zu behandeln. Die Sortiersieböffnungen des Trommelsortierers 72 sollten einen Durchmesser ungefähr zwischen 4 und 12 mm aufweisen und sie werden zweckmäßigerweise so gestaltet, daß sie sich von innen nach außen erweitern.

DR.-ING.          DIPL.-ING. M. SC.          DIPL.-PHYS. DR.          DIPL.-PHYS.      DIPL.-PHYS. DR.

# HÖGER – STELLRECHT – GRIESSBACH – HAECKER BOEHME
## PATENTANWÄLTE IN STUTTGART

A 0010 b
b - 184
15. Oktober 1979

Firma Hermann Finckh
Maschinenfabrik GmbH & Co.
Marktstraße 185
D-7417 Pfullingen

A n s p r ü c h e :

1. Verfahren zum Aufbereiten von Altpapier, bei dem dieses unter
ständiger Bewegung und Umschichtung eingeweicht, dabei ggf.
chemisch behandelt, aufgelöst sowie die sich dann ergebende
Fasersuspension sortiert wird, d a d u r c h   g e k e n n -
z e i c h n e t, daß der eingeweichte Stoff unmittelbar nach
dem Einweichen zum Quellen zwischengelagert wird.

2. Verfahren nach Anspruch 1, dadurch gekennzeichnet, daß der Stoff
für einen Zeitraum mindestens gleicher Größenordnung wie die
Einweichzeit zwischengelagert wird.

3. Verfahren nach Anspruch 1 oder 2, dadurch gekennzeichnet, daß
der Stoff zum Einweichen und Quellen auf eine Stoffdichte von
ungefähr 20-40% gebracht wird.

4. Verfahren nach Anspruch 1, 2 oder 3, dadurch gekennzeichnet,
daß bei einer Temperatur von ungefähr 40° C eingeweicht wird.

5. Verfahren nach einem der Ansprüche 1-4, dadurch gekennzeichnet,
daß die Einweichzeit bis zu ungefähr 2 Stunden beträgt.

6. Verfahren nach einem der Ansprüche 1-5, dadurch gekennzeichnet,
daß die Zwischenlagerungszeit bis zu ungefähr 4 Stunden beträgt.

7. Verfahren nach einem oder mehreren der Ansprüche 1-6, dadurch
gekennzeichnet, daß die Einweich- und die Zwischenlagerungszeit
jeweils ungefähr 20-60 min betragen.

8. Verfahren nach Anspruch 7, dadurch gekennzeichnet, daß die Einweichzeit zirka 20-45 min beträgt.

9. Verfahren nach Anspruch 7, dadurch gekennzeichnet, daß die daß die Zwischenlagerungszeit ungefähr 30-60 min beträgt.

10. Verfahren nach einem oder mehreren der vorstehenden Ansprüche, dadurch gekennzeichnet, daß Abwasser des Aufbereitungsverfahrens Wärme entzogen und diese dem Einweichwasser zugeführt wird.

11. Verfahren nach einem oder mehreren der vorstehenden Ansprüche, dadurch gekennzeichnet, daß der Stoff aus der zwischengelagerten Stoffmenge in kleinen Portionen herausgekratzt wird.

12. Verfahren nach einem oder mehreren der vorstehenden Ansprüche, bei dem das Altpapier chargenweise eingeweicht wird, dadurch gekennzeichnet, daß das einzuweichende Altpapier gewogen und die zuzugebende Wassermenge entsprechend einer vorgegebenen Stoffdichte errechnet und abgemessen wird.

13. Verfahren nach einem oder mehreren der vorstehenden Ansprüche, dadurch gekennzeichnet, daß der eingeweichte und zwischengelagerte Stoff zur Einstellung einer Stoffdichte von mindestens ungefähr 8%, vorzugsweise von ungefähr 8-12%, mit Wasser versetzt und dadurch mit diesem gemischt wird, daß Stoff und Wasser gemeinsam für einige wenige Minuten in rasche Zirkulation versetzt werden.

14. Verfahren nach Anspruch 13, dadurch gekennzeichnet, daß Stoff und Wasser für ungefähr 2-5 min in rasche Zirkulation versetzt werden.

15. Verfahren nach Anspruch 13 oder 14, dadurch gekennzeichnet, daß der Stoff erst nach Beendigung der raschen Zirkulation sortiert wird.

16. Einrichtung zur Durchführung des Verfahrens nach einem oder mehreren der vorstehenden Ansprüche, dadurch gekennzeichnet, daß ein in Rotation versetzbares Einweichgefäß (12) mit einer Öffnung (18) und einem servobetätigten Verschluß (20) hierfür, eine Wiegevorrichtung (26) für das einzuweichende Altpapier, eine Bemessungsvorrichtung (32, 36) für das Einweichwasser sowie ein von diesen beiden Vorrichtungen beaufschlagter Rechner (28) zur Steuerung des Verschlusses (20) vorgesehen sind.

17. Einrichtung nach Anspruch 16, dadurch gekennzeichnet, daß sich unter dem Einweichgefäß (12) ein Bunker (40) zum Zwischenlagern des eingeweichten Stoffs befindet.

18. Einrichtung nach Anspruch 17, dadurch gekennzeichnet, daß am Boden (42) des Bunkers (40) eine Bunkerentleerungs- und Verteileinrichtung (44) vorgesehen ist, welche zumindest über den größten Teil des Bunkerbodenquerschnitts verteilt mehrere Stofförderelemente (44b, 44c) aufweist.

19. Einrichtung nach einem oder mehreren der Ansprüche 16-18, dadurch gekennzeichnet, daß zum Mischen des zwischengelagerten Stoffs mit Wasser ein Mischer (52) mit einem Behälter und einem über dem Behälterboden (52a) angeordneten, antreibbaren Mischrad (52b) vorgesehen ist.

20. Einrichtung nach Anspruch 19, dadurch gekennzeichnet, daß das Mischrad (52b) unmittelbar über dem Behälterboden (52a) angeordnet ist.

21. Einrichtung nach Anspruch 19 oder 20, gekennzeichnet durch eine dem Mischer (52) zugeordnete Wiegevorrichtung (56) zum Wiegen der in den Mischer einzugebenden Stoffmenge, einen an die Wiegevorrichtung angeschlossenen Rechner (66) zur Bestimmung der in den Mischer (52) einzugebenden Wassermenge sowie eine rechnergesteuerte Bemessungsvorrichtung (62, 64) für die in den Mischer einzugebende Wassermenge.

22. Einrichtung nach einem oder mehreren der Ansprüche 19-21, dadurch gekennzeichnet, daß der Mischer (52) im Bereich des Behälterbodens (52a) einen Auslaß (52d) mit einem zeitgesteuerten Entleerungsventil (54) aufweist.

23. Einrichtung nach einem oder mehreren der Ansprüche 19-22, dadurch gekennzeichnet, daß dem Mischer (52) ein offener Sortierer (72) nachgeordnet ist.

24. Einrichtung nach Anspruch 23, dadurch gekennzeichnet, daß der Sortierer eine liegende, um ihre Längsachse drehbare, mit Sieböffnungen versehene Trommel (72) aufweist, gegen die von außen Spritzwasserdüsen (82) gerichtet sind.

25. Einrichtung nach Anspruch 24, dadurch gekennzeichnet, daß die Spritzwasserdüsen (82) über der Trommel (72) angeordnet sind.

A 0010 b
b - 135
10. Sept. 1979

26. Einrichtung nach einem oder mehreren der Ansprüche
    16-25, dadurch gekennzeichnet, daß zwischen einer
    Abwasserleitung und einer zum Einweichgefäß (12)
    führenden Einweichwasserleitung (34) eine Wärmepumpenanlage (96) zur Erwärmung des Einweichwassers vorge-
    sehen ist.

Fig. 1

Fig. 2

0028658

# Fig. 3

12

40a

44c    44b    18    40

49    40b

44a    48    42    46    48    44a

0028658

**Europäisches Patentamt**

# EUROPÄISCHER RECHERCHENBERICHT

Nummer der Anmeldung
EP 79 10 4375

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | DE - B - 2 751 084 (VOITH)<br><br>* Spalte 4, Zeile 65 bis Spalte 8, Zeile 5 *<br><br>-- | 1,3,4,<br>6,11,<br>13,15,<br>17,18,<br>23 | D 21 B 1/32<br>D 21 D 1/00 |
| | DE - A - 1 461 039 (PAV)<br><br>* Seite 3, Zeile 11 bis Seite 7, Zeile 3 *<br><br>-- | 1,3,<br>11,15 | |
| | US - A - 3 330 487 (PAV et al)<br><br>* Spalte 3, Zeile 5 bis Spalte 6, Zeile 58 *<br><br>-- | 1,3,<br>11,15 | RECHERCHIERTE SACHGEBIETE (Int. Cl. ³)<br><br>D 21 B<br>D 21 F<br>D 21 D |
| | DE - B - 2 339 591 (VOITH)<br><br>* Das ganze Dokument *<br><br>-- | 1,3,5,<br>13,15,<br>17,19,<br>20,23 | |
| | US - A - 3 387 794 (BIDWELL)<br><br>* Spalte 4, Zeile 61 bis Spalte 15, Zeile 51 *<br><br>-- | 1,12 | |
| A | DE - A - 2 728 422 (PROJEKTIERUNG)<br><br>* Das ganze Dokument *<br><br>-- | 1 | KATEGORIE DER GENANNTEN DOKUMENTE |
| A | US - A - 1 759 385 (WITHAM JR.)<br><br>* Das ganze Dokument *<br><br>---- | 1 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort Den Haag | Abschlußdatum der Recherche 03-07-1980 | Prüfer DE RIJCK |
|---|---|---|

EPA form 1503.1 06.78